# EUROPÄISCHE PATENTSCHRIFT

(11) **EP 3 361 175 B1**
(45) Veröffentlichungstag und Bekanntmachung des Hinweises auf die Patenterteilung: **18.12.2019**
(21) Anmeldenummer: 18153296.1
(22) Anmeldetag: 24.01.2018
(51) Int. Cl.: F24D 3/16, F24F 5/00, E04B 9/04, F24F 13/20, F24F 13/06

(54) **DECKENELEMENT, INSBESONDERE EINER KÜHL- ODER HEIZDECKE**
CEILING ELEMENT, IN PARTICULAR OF A COOLED OR HEATED CEILING
ÉLÉMENT DE PLAFOND, EN PARTICULIER D'UN PLAFOND REFROIDISSANT OU CHAUFFANT

(30) Priorität: 08.02.2017 DE 202017100665 U
(43) Veröffentlichungstag der Anmeldung: 15.08.2018
(73) Patentinhaber: Zent-Frenger GmbH, 64646 Heppenheim (DE)
(72) Erfinder: Haug, Gerd, 71229 Leonberg (DE); Steckel, Stefan, 64646 Heppenheim (DE); Neth, Matthieu, 88433 Schemmerhofen (DE)
(74) Vertreter: Flügel Preissner Schober Seidel

(56) Entgegenhaltungen:
- EP-A1- 0 552 690
- EP-A1- 1 777 469
- WO-A1-2011/152786
- DE-A1- 3 921 719
- DE-A1- 10 219 669

## Beschreibung

Die vorliegende Erfindung betrifft ein Deckenelement, insbesondere einer Kühl- oder Heizdecke, aufweisend eine Tragkonstruktion zum Befestigen des Deckenelements an einer Raumdecke, eine an der Tragkonstruktion befestigte Rohranordnung, die von einem Wärme transportierenden Medium durchströmbar ist, und einen an der Tragkonstruktion befestigten Luftkasten, der von Zuluft durchströmbar ist und einen Einlass und einen Auslassbereich aufweist.

Ein derartiges Deckenelement ist beispielsweise aus der europäischen Patentschrift EP 1 586 823 B1 bekannt.

Ferner wird ein Kühl-Heiz-Lüftungsmodul, das ein gattungsgemäßes Deckenelement aufweist, in DE 102 19 669 A1 offenbart. Dieses Dokument offenbart ein Deckenelement gemäß dem Oberbegriff des Anspruchs 1.

Für die Klimatisierung von Gebäuden finden raumlufttechnische Anlagen Anwendung, die einem geschlossenen Raum frische Luft zuführen und in Abhängigkeit von dem gewünschten Raumluftzustand diese erwärmen, kühlen, filtern, befeuchten oder entfeuchten. Neben herkömmlichen Klimaanlagen, welche die Raumtemperatur und die Luftfeuchte in einem Raum ausschließlich über die Zuluft auf vorgegebenen Werten halten, sind zunehmend häufiger Kühl- und Heizdecken anzutreffen, die geräuschlos eine angenehme und zugfreie Raumtemperatur erzeugen. Die Menge an Zuluft beschränkt sich in solchen Fällen auf den zur Aufrechterhaltung eines Hygienestandards erforderlichen Bedarf.

Grund hierfür ist, dass bei einer Kühl- oder Heizdecke der gewünschte Effekt vornehmlich durch Strahlungsaustausch zwischen den gekühlten oder erwärmten Deckenflächen und dem Raum erfolgt. Demgegenüber wird bei herkömmlichen Klimaanlagen der Wärmeaustausch hauptsächlich durch erzwungene Konvektion, die beim Menschen Zugerscheinungen auslösen kann, erzielt. Darüber hinaus zeichnen sich Kühl- oder Heizdecken im Vergleich zu herkömmlichen Klimaanlagen durch einen geringeren Energieverbrauch und geringere Wartungs- und Instandsetzungskosten aus. Außer zum Kühlen oder Heizen lassen sich Kühl- und Heizdecken gewöhnlich auch zur Raumgestaltung, Lichtreflexion oder Schallabsorption verwenden.

Ein Problem bekannter Kühl- oder Heizdecken besteht darin, dass sich insbesondere in einem Auslassbereich eines Deckenelements Verschmutzungen ansammeln können, die zu einer Beeinträchtigung des Hygienestandards des belüfteten Raums führen. Bedingt durch die Anordnung der Deckenelemente an einer Raumdecke sind diese zudem oft nur schwer zugänglich und somit nur mit verhältnismäßig großem Aufwand zu reinigen.

Aufgabe der vorliegenden Erfindung ist es, ein verbessertes Deckenelement der oben genannten Art zu beschreiben, das besonders einfach oder gründlich gereinigt werden kann.

Die oben genannte Aufgabe wird durch ein Deckenelement der oben genannten Art gelöst, dass eine an der Tragkonstruktion befestigbare Deckenplatte aufweist, wobei die Deckenplatte eine Oberseite, eine Unterseite und eine Mehrzahl von Öffnungen im Bereich des Auslassbereichs des Luftkastens aufweist, und wobei die Oberseite der Deckenplatte über erste flächige, den Luftkasten umgebende Verbindungsmittel lösbar mit dem Luftkasten verbunden ist.

Durch das Vorsehen einer lösbaren Deckenplatte im Bereich eines Luftauslass eines Luftkastens können insbesondere in diesem Bereich auftretende Verunreinigungen leicht beseitigt werden. Beispielsweise kann die Deckenplatte von dem Deckenelement abgenommen oder weggeklappt, in einem abgenommenen oder aufgeklappten Zustand mit einem Lappen oder ähnlichem Reinigungselement abgewischt und nachfolgend wieder an dem Luftkasten befestigt beziehungsweise herangeklappt werden. Auch der Luftkasten selbst ist im gelösten Zustand der Deckenplatte vollständig zugänglich und kann somit besonders einfach und gründlich gereinigt werden. Durch Vorsehung der flächigen, den Luftkasten umgebende Verbindungsmittel ist im geschlossenen Zustand dabei eine hinreichende Dichtigkeit des Luftzuführungsweges des Deckenelements gewährleistet.

In wenigstens einer Ausgestaltung weisen die ersten Verbindungsmittel wenigstens ein streifenförmiges Magnetelement auf. Die Verwendung von Magnetelementen ermöglicht eine besonders einfache Befestigung, was insbesondere bei Arbeiten im Bereich einer Zimmerdecke von Vorteil ist. Zudem ermöglichen sie die Herstellung einer verhältnismäßig luftdichten Verbindung zwischen dem Luftkasten und der Deckenplatte.

In wenigstens einer Ausgestaltung ist die Oberseite der Deckenplatte über zweite flächige, im Bereich der Rohranordnung angeordnete Verbindungsmittel lösbar mit der Tragkonstruktion und/oder Rohranordnung verbunden. Durch weitere flächige, im Bereich der Rohranordnung angeordnete Verbindungsmittel kann eine sichere thermische Verbindung zwischen der Rohranordnung und dem Deckenelement sichergestellt werden.

Beispielsweise weist die Rohranordnung eine Mehrzahl von Rohren, eine Mehrzahl von Profilen und eine Mehrzahl von streifenförmigen Magnetelementen auf, wobei die Mehrzahl von Rohren in Aufnahmevorrichtungen auf einer Oberseite der Mehrzahl von Profilen aufgenommen sind und die Mehrzahl von streifenförmigen Magnetelementen auf einer Unterseite in die Mehrzahl von Profilen eingelassen sind. Durch eine derartige Anordnung kann eine besonders einfache Montage beziehungsweise Demontage der Deckenplatte sichergestellt werden. Es ist von besonderem Vorteil, wenn die eingesetzten ersten und zweiten Verbindungsmittel gleichartig, beispielsweise als Magnetelemente, ausgeführt sind.

In wenigstens einer Ausgestaltung sind die Deckenplatte und die Tragkonstruktion mittels einer scharnierartigen Verbindung im Bereich einer ersten Seitenkante des Deckenelements miteinander verbunden, sodass die Deckenplatte durch Lösen der flächigen Verbindungsmittel entlang der ersten Seitenkante von der Tragkonstruktion wegklappbar ist. Die Verwendung einer scharnierartigen Verbindung sichert die Deckenplatte gegen ein Herunterfallen von der Deckenkonstruktion.

Beispielsweise kann die scharnierartige Verbindung wenigstens eine Vertiefung der Tragkonstruktion und wenigstens ein in die wenigstens eine Vertiefung eingreifendes Haltelement der Deckenplatte zum lösbaren Befestigen der Deckenplatte an der Tragkonstruktion aufweisen. Eine solche, mechanisch einfache Konstruktion gewährleistet sowohl ein sicheres Auf- und Zuklappen des Deckenelements als auch die Möglichkeit, das Deckenelement vollständig abnehmen zu können.

In wenigstens einer Ausgestaltung ist die Deckenplatte in einem zugeklappten Zustand, in dem die ersten flächigen Verbindungsmittel die Oberseite der Deckenplatte mit dem Luftkasten verbinden, mittels wenigstens eines mechanischen Verschlusses im Bereich einer der ersten Seitenkante gegenüberliegenden zweiten Seitenkante des Deckenelements an der Tragkonstruktion gesichert. Ein derartiger Verschluss sichert das Deckenelement gegen ein unbeabsichtigtes Aufklappen der Deckenplatte.

In wenigstens einer Ausgestaltung weist die Tragkonstruktion eine Mehrzahl von mechanisch miteinander gekoppelten Zahnschienen auf, wobei die Rohranordnung an den Zahnschienen befestigt ist. Eine solche Tragkonstruktion ist leicht zu fertigen und ermöglicht die Festlegung unterschiedlicher Ausgestaltungen von Rohranordnungen an einer ansonsten einheitlichen Tragkonstruktion. Beispielsweise können die Zahnschienen über einen umlaufenden Rahmen oder Profile der Rohranordnung selbst miteinander verbunden werden.

In wenigstens einer Ausgestaltung weist die Tragkonstruktion und/oder der Luftkasten des Weiteren zwei Befestigungswinkel zur Fixierung des Luftkastens an der Tragkonstruktion auf. Eine derartige Anordnung ermöglicht insbesondere die einfache Remontage des Luftkastens, nachdem die Tragkonstruktion bereits an einer Raumdecke befestigt ist.

Weitere vorteilhafte Ausgestaltungen der Erfindung sind in der nachfolgenden Beschreibung von Ausführungsbeispielen sowie den angehängten Patentansprüchen enthalten.

Die Erfindung wird nachfolgend anhand von Ausführungsbeispielen unter Bezugnahme auf die angehängten Figuren im Detail beschrieben. In den Figuren zeigen:
Figur 1 eine schematische Darstellung eines Deckenelements gemäß einer Ausgestaltung der Erfindung,
Figur 2 eine Detaildarstellung der Aufhängung des Deckenelements gemäß Figur 1,
Figur 3 schematische Ansichten auf ein Deckenelement gemäß einer Ausgestaltung der Erfindung,
Figur 4 eine schematische Darstellung gemäß einer weiteren Ausgestaltung der Erfindung,
Figur 5 eine schematische Darstellung gemäß einer weiteren Ausgestaltung der Erfindung,
Figur 6 eine erste perspektivische Ansicht eines Deckenelements gemäß einer Ausgestaltung der Erfindung und
Figur 7 eine zweite perspektivische Ansicht eines Deckenelements gemäß einer Ausgestaltung der Erfindung.

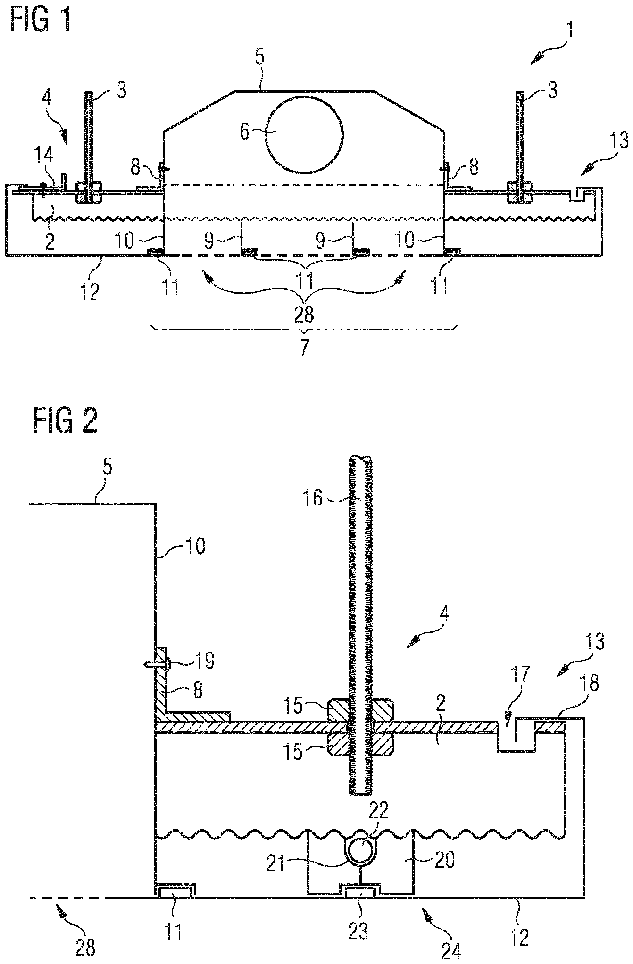

Figur 1 zeigt eine kombinierte Schnittansicht und partielle Aufsicht eines Deckenelements 1 gemäß einer ersten Ausgestaltung der Erfindung. Solche Deckenelemente 1 werden insbesondere beim Einsatz zur Raumkühlung zum Teil auch als "Kühlsegel" bezeichnet und hängend unter einer Zimmerdecke befestigt. Je nach Größe des zu klimatisierenden Raums sind Anordnungen mit nur einem oder mehreren, typischerweise in einer Reihe angeordneten Deckenelementen 1 möglich.

Das Deckenelement 1 umfasst im Ausführungsbeispiel eine Zahnschiene 2, die über zwei Aufhängungen 3 mit einer in der Figur 1 nicht dargestellten Zimmerdecke verbunden sind. Die Zahnschiene 2 und die Aufhängungen 3 bilden zusammen mit weiteren, in der Figur 1 nicht ersichtlichen Teilen eine Tragkonstruktion 4 des Deckenelementes 1.

Die Tragkonstruktion 4 dient unter anderem zur Befestigung eines in Betrachtungsrichtung vor der Zahnschiene 2 angeordneten Luftkastens 5 in einem mittleren Bereich des Deckenelements 1. Hierzu weist der Luftkasten 5 an seinen Seitenwänden 10 zwei Befestigungswinkel 8 auf, die den Luftkasten 5 auf der Zahnschiene 2 abstützen. Der Luftkasten 5 weist des Weiteren einen oberhalb der Zahnschiene 2 liegenden Lufteinlass 6 und einen in Richtung des Rauminneren weisenden Luftauslassbereich 7 auf. Über den Lufteinlass 6, den Luftkasten 5 und den Luftauslassbereich 7 kann einem Raum Zuluft zur Verbesserung des Raumklimas zugeführt werden. Die zugeführte Luft kann bei Bedarf be- oder entfeuchtet, erwärmt oder abgekühlt werden.

Die zwei Seitenwände 10 sowie zwei dazwischenliegende Profilelemente 9 des Luftkastens 5 enden im Luftauslassbereich 7 jeweils in einem horizontalen Abschnitt, beispielsweise dem kurzen Schenkel eines L-förmigen Winkels. An den horizontalen Abschnitten der Profilelemente 9 und der Seitenwände 10 ist dabei jeweils ein streifenförmiges magnetisches Befestigungselement 11 angeordnet. Die magnetischen Befestigungselemente 11 stellen eine Verbindung zwischen dem Luftkasten 5 und einer darunter angeordneten, metallischen Deckenplatte 12 her. Die Deckenplatte 12 weist eine dem Luftkasten 5 zugewandte Oberseite und eine dem zu klimatisierenden Raum zugewandte Unterseite auf und ist zumindest im Bereich des Luftkastens 5 perforiert, um einen Austritt von Zuluft in den Raum zu ermöglichen. Die Perforation 28 kann sich auch über die gesamte Fläche der Deckenplatte 12 erstecken, beispielsweise zum Zweck einer ansprechenden Innenraumgestaltung.

Anstelle der magnetischen Befestigungselemente 11 können auch andere flächige, lösbare Verbindungsmittel, wie beispielsweise Klettstreifen, Verwendung finden. Je nach Haltekraft der Verbindungsmittel dienen diese zusätzlich zur Herstellung einer möglichst dichten Verbindung zwischen dem Luftkasten 5 und der Deckenplatte 12 gegebenenfalls auch zum Halten der Deckenplatte 12 an dem Deckenelement 1.

Im beschriebenen Ausführungsbeispiel ist die Haltekraft der magnetischen Befestigungselemente 11 ausreichend, um die relativ leichte Deckenplatte 12 an dem Deckenelement 1 festzuhalten. Zur Verbesserung der Sicherheit und zur weiteren Vereinfachung eines Reinigungsvorgangs ist die Deckenplatte 12 des Weiteren über eine scharnierartige Verbindung 13 schwenkbar an der Zahnschiene 2 aufgehängt. An einem der scharnierartigen Verbindung 13 gegenüberliegenden Ende der Zahnschiene 2 ist die Deckenplatte 12 zusätzlich über einen Riegel 14 mit der Zahnschiene 2 verbunden, um ein unbeabsichtigtes Aufklappen der Deckenplatte 12 zu verhindern. Der Riegel 14 kann entweder manuell betätigt werden oder als "Schapper" beim Hochklappen selbstständig hinter einem Vorsprung der Deckenplatte 12 verrasten.

Figur 2 zeigt Details der Tragkonstruktion 4 und weiterer Teile des Deckenelements 1 gemäß der Ausgestaltung nach Figur 1. Insbesondere ist hierin zu erkennen, dass die Zahnschiene 2 über zwei Schraubenmuttern 15 höhenverstellbar an einer Gewindestange 16 befestigt ist. Zudem ist zu erkennen, dass die scharnierartige Verbindung 13 im Ausführungsbeispiel aus einer rechteckförmigen Vertiefung 17 an einer Oberseite der Zahnschiene 2 sowie einem darin eingreifenden, aus der Erstreckungsebene der Deckenplatte 12 dreifach rechtwinklig abgewinkelten, die Seitenkante des Deckenelements 1 umgreifenden Halteelement 18 besteht. Diese verhältnismäßig einfache mechanische Konstruktion erlaubt ein sicheres Auf- und Zuklappen der Deckenplatte 12 und bietet gleichzeitig die Möglichkeit, die Deckenplatte 12 ohne Verwendung eines Werkzeugs durch Anheben im aufgeklappten Zustand vollständig von der Tragkonstruktion 4 zu lösen und wieder einzuhängen.

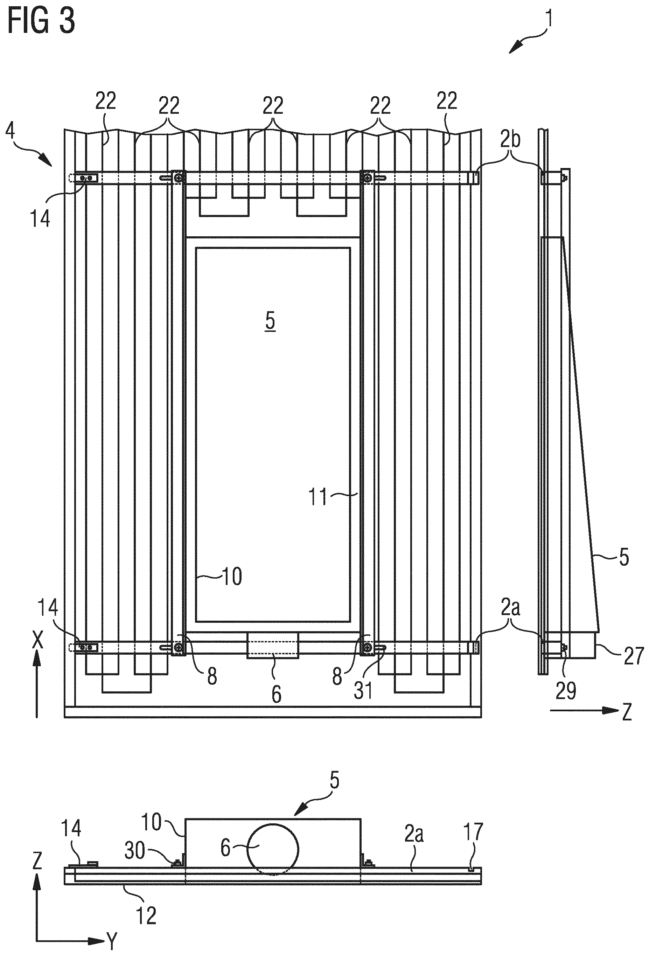

Zudem ist in der Figur 2 zu erkennen, dass der Befestigungswinkel 8 zwar durch eine Schraube 19 permanent an der Seitenwand 10 des Luftkastens 5 befestigt ist, jedoch lediglich auf der Zahnschiene 2 der Tragkonstruktion 4 aufliegt. Diese Konstruktion erlaubt eine mechanisch sichere und doch flexible Verbindung zwischen Luftkasten 5 und der Tragkonstruktion 4, was insbesondere bei der Remontage des Luftkastens 5 von Vorteil ist und einen Toleranzausgleich ermöglicht. Eine weitere Fixierung des Luftkastens 5 kann wie unten unter Bezugnahme auf die Figur 3 beschrieben erfolgen.

Schließlich ist in der Figur 2 auch ein Teil einer Rohranordnung 24 zu erkennen, die wärmeleitend mit der Deckenplatte 12 verbunden ist. Die Rohranordnung 24 umfasst ein metallisches, schienenförmiges Profil 20, das an der Zahnschiene 2 befestigt ist. In das Profil 20 eingelassen ist eine Aufnahme 21 zum Einlegen eines Rohres 22. Das Rohr 22 wird im Betrieb der Heiz- oder Kühldecke von einem temperierten Medium, insbesondere Wasser, durchströmt und dient so zum Aufheizen beziehungsweise Abkühlen eines darunterliegenden Raums. Um eine gute Wärmeleitung von dem Rohr 22 zu der Deckenplatte 12 sicherzustellen, ist in das Profils 20 ein weiteres streifenförmiges, magnetisches Befestigungselement 23 eingelassen, das eine direkte und damit wärmeleitende Verbindung zwischen einer Oberfläche des metallischen Profils 20 und einer Oberseite der Deckenplatte 12 herstellt. Über die Unterseite der Deckenplatte 12 erfolgt dann eine Erwärmung oder Abkühlung des darunterliegenden Raums, insbesondere durch Wärmestrahlung.

Figur 3 zeigt schematisch verschiedene Ansichten eines Deckenelements 1 gemäß einer Ausgestaltung der Erfindung. Darin ist insbesondere die registerförmige Anordnung der Rohre 22 zwischen zwei von insgesamt drei Zahnschienen 2 einer Tragkonstruktion 4 zu erkennen. Zudem ist zu erkennen, dass die Befestigungswinkel 8 sich zwischen einer ersten, seitlichen Zahnschiene 2a und einer zweiten, mittleren Zahnschiene 2b der Tragkonstruktion 4 erstecken. Die Befestigungswinkel 8 sind über Muttern 29 und Stehbolzen 30 an Langlöchern 31 der Zahnschienen 2a und 2b zur Abhängung fixiert. Der Luftkasten 5 ist in der dargestellten Ebene vollständig von dem flächigen Befestigungselement 11 umgeben, so dass seine Seitenwände 10 bündig mit der darunterliegenden Deckenplatte 12 abschließen. Entgegen der Ausgestaltung nach Figur 1 weist die Anordnung jedoch keine im Luftauslassbereich 7 angeordnete Profilelemente 7 auf. Die Deckenplatte 12 ist auf der rechten Seite in eine Vertiefung 17 eingehängt und auf der gegenüberliegenden linken Seite mittels eines Drehriegels 14 gesichert. Zur Zuführung von frischer Zuluft weist der Lufteinlass 6 einen Anschlussstutzen zum Anschluss eines entsprechenden Zuführungsrohrs oder -schlauchs auf.

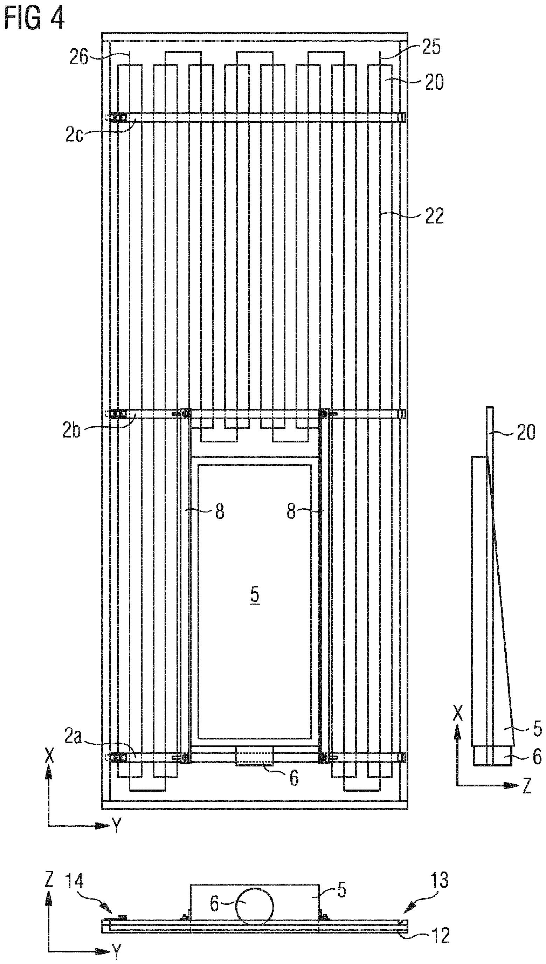

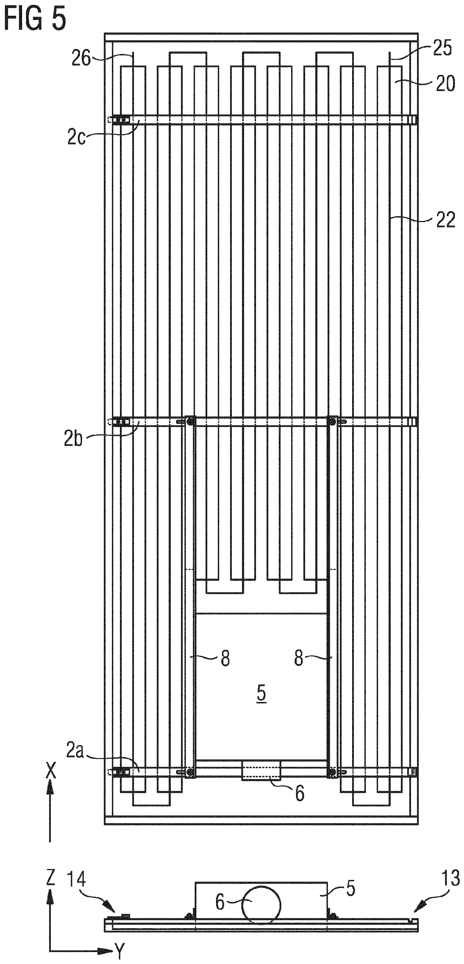

In den Figuren 4 und 5 sind Ansichten von zwei unterschiedlichen Ausgestaltungen eines derartigen Deckenelements 1 mit unterschiedlichen großen Luftkästen 5 dargestellt. Die Tragkonstruktion 4 ist dabei jeweils gleichartig ausgestaltet. Nur die Rohranordnung 24 ist so angepasst, dass sie den jeweils nicht von dem Luftkasten 5 eingenommen Raum möglichst gut ausnutzt. Um eine Belüftung des unter der Deckenplatte 12 liegenden Raumes zu ermöglichen, weist die Deckenplatte 12 jeweils eine Perforation 28 im Luftauslassbereich 7 auf.
Ein Rohrregister endet jeweils in Anschlüssen 25 und 26 für einem Vorlauf- beziehungsweise Rücklaufkreis eines Heiz- oder Kühlkreislaufs. Im Ausführungsbeispiel befinden sich die Anschlüsse 25 und 26 auf gegenüberliegenden Seiten des Deckenelements im Bereich einer dritten Zahnschiene 2c.

In der Ausgestaltung gemäß Figur 4 erstreckt sich der Luftkasten 5 im Wesentlichen über den gesamten zwischen einer ersten Zahnschiene 2a und einer zweiten Zahnschiene 2b zur Verfügung stehenden Raum. Beispielsweise erstreckt sich der Luftkasten 5 in einer horizontalen x-Richtung über 520 mm eines Deckenelements mit einer Plattenlänge von insgesamt 2425 mm. In einer sich dazu rechtwinklig erstreckenden, ebenfalls horizontalen y-Richtung erstreckt sich der Luftkasten 5 beispielsweise über eine Kastenlänge von 550 mm von einer Plattenbreite von 850 mm.

In der alternativen Ausgestaltung gemäß Figur 5 erstreckt sich der Luftkasten 5 nur in etwa auf einer Länge, die dem halben Abstand zwischen zwei benachbarten Zahnschienen 2a und 2b entspricht. Beispielsweise kann er eine Länge in x-Richtung von 260 mm bei einer Gesamtlänge des Deckenelementes von 2425 mm aufweisen. In einer dazu senkrecht liegenden Querrichtung y weist der Luftkasten 5 wiederum eine Länge (Breite) von 550 mm auf, sodass er auf derselben Tragkonstruktion 4 befestigt werden kann. Die Länge und Breite des Luftkastens hängt vom freien Querschnitt der Deckenplatte 12 ab. In diesem Ausführungsbeispiel steht ein größerer Flächenanteil der Deckenplatte 12 zum Erwärmen beziehungsweise Abkühlen eines darunterliegenden Raumes über die Rohranordnung 24 zur Verfügung. Ansonsten ist die Wirkungsweise der Ausgestaltungen gemäß den Figuren 4 und 5 gleich.

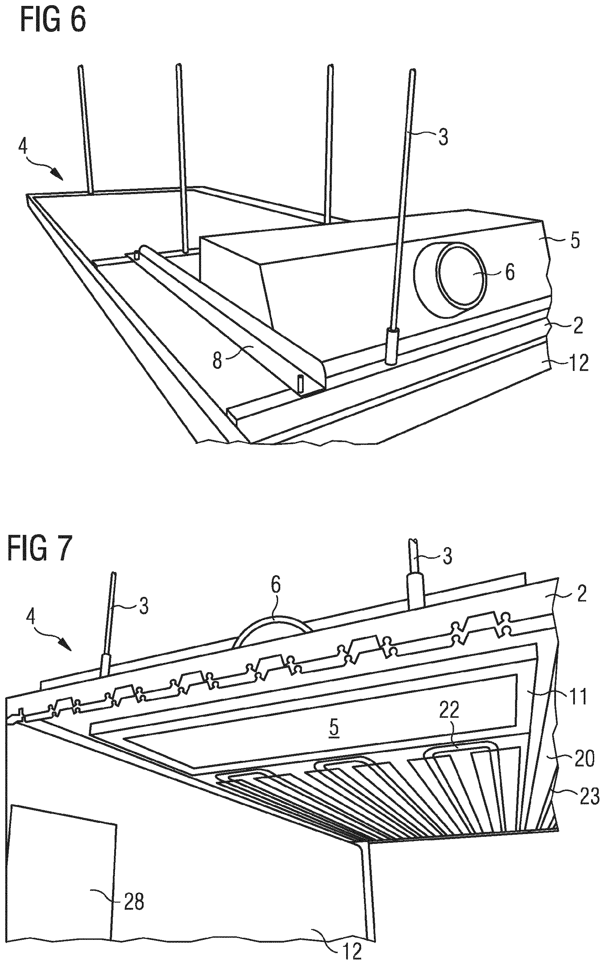

In den Figuren 6 und 7 sind unterschiedliche perspektivische Ansichten einer weiteren Ausgestaltung eines Deckenelements 1 zu erkennen. In der Figur 6 kann man insbesondere die Montage des Luftkastens 5 an einer Oberseite einer Tragkonstruktion 4 erkennen. In der Figur 7 ist das Deckenelement 1 in einem aufgeklappten Zustand dargestellt. Darin erkennt man insbesondere, dass in diesem Zustand die Deckenplatte 12 in den Raum herabhängt und so insbesondere ihre Oberseite mit einer darin befindlichen Perforation 28 durch einfaches Abwischen gereinigt werden kann. Zudem erkennt man, dass der Luftkasten 5, und insbesondere sein Innenraum, in diesem Zustand vollständig zugänglich ist und ebenfalls einfach gereinigt werden kann. Das Deckenelement 1 erfüllt somit auch die Hygienevorschriften gemäß der VDI-Norm 6022 "Raumlufttechnik, Raumluftqualität".

Neben der einfachen und wirksamen Reinigung und Wartung des Deckenelements 1 ist dieses auch besonders einfach zu montieren. In einem ersten Schritt kann die Tragkonstruktion 4 mit bereits darin montierter Rohranordnung 24 an einer Zimmerdecke befestigt werden. Nachfolgend können die frei zugänglichen Anschlüsse 25 und 26 mit einem Vorbeziehungsweise Rücklauf eines Heiz- oder Kühlkreislaufs verbunden werden. Anschließend kann der Luftkasten 5 auf die Tragkonstruktion 4 aufgesetzt, über den Lufteinlass 6 an ein Zuführungsrohr angeschlossen und an den Zahnschienen 2 fixiert werden. Zuletzt wird die Deckenplatte 12 werkzeugfrei mittels der Haltelemente 18 in die Vertiefungen 17 eingehängt, mittels der so gebildeten scharnierartigen Verbindung 13 an die Zimmerdecke geklappt und abschließend durch den Riegel 14 im hochgeklappten Zustand gesichert. Das relativ späte Anbringen der Deckenplatte 12 verhindert dabei mögliche Beschädigungen derselben während der Installation der Rohranordnung 24 und des Luftkastens 5.

### Bezugszeichenliste

- 1: Deckenelement
- 2: Zahnschiene
- 3: Aufhängung
- 4: Tragkonstruktion
- 5: Luftkasten
- 6: Lufteinlass
- 7: Luftauslassbereich
- 8: Befestigungswinkel
- 9: Profilelement
- 10: Seitenwand
- 11: Befestigungselement
- 12: Deckenplatte
- 13: scharnierartige Verbindung
- 14: Riegel
- 15: Schraubenmutter
- 16: Gewindestange
- 17: Vertiefung
- 18: Halteelement
- 19: Schraube
- 20: Profil
- 21: Aufnahme
- 22: Rohr
- 23: Befestigungselement
- 24: Rohranordnung
- 25: Anschluss (Vorlauf)
- 26: Anschluss (Rücklauf)
- 28: Perforation
- 29: Mutter
- 30: Stehbolzen
- 31: Langloch

## Patentansprüche

1. Deckenelement (1), insbesondere einer Kühl- oder Heizdecke, aufweisend:
eine Tragkonstruktion (4) zum Befestigen des Deckenelements (1) an einer Raumdecke;
eine an der Tragkonstruktion (4) befestigte Rohranordnung (24), die von einem Wärme transportierenden Medium durchströmbar ist;
einen an der Tragkonstruktion (4) befestigten Luftkasten (5), der von Zuluft durchströmbar ist und einen Einlass (6) und einen Auslassbereich (7) aufweist, und
eine an der Tragkonstruktion (4) befestigbare Deckenplatte (12), die eine Oberseite, eine Unterseite und eine Mehrzahl von Öffnungen im Bereich des Auslassbereichs (7) des Luftkastens (5) aufweist;
**dadurch gekennzeichnet, dass** die Oberseite der Deckenplatte (12) über erste flächige, den Luftkasten (5) umgebende Verbindungsmittel (11) lösbar mit dem Luftkasten (5) verbunden ist.

2. Deckenelement (1) nach Anspruch 1, wobei die ersten Verbindungsmittel wenigstens ein streifenförmiges magnetisches Befestigungselement (11) aufweisen.

3. Deckenelement (1) nach Anspruch 1 oder 2, wobei die Oberseite der Deckenplatte (12) über zweite flächige, im Bereich der Rohranordnung (24) angeordnete Verbindungsmittel (23) lösbar mit der Tragkonstruktion (4) und/oder der Rohranordnung (24) verbunden ist.

4. Deckenelement (1) nach Anspruch 3, wobei die Rohranordnung (24) eine Mehrzahl von Rohren (22) und eine Mehrzahl von Profilen (20) aufweist;
wobei das zweite Verbindungsmittel eine Mehrzahl von streifenförmigen magnetischen Befestigungselementen (23) aufweist;
wobei die Mehrzahl von Rohren (22) in Aufnahmevorrichtungen auf einer Oberseite der Mehrzahl von Profilen (20) aufgenommen ist und die Mehrzahl von den streifenförmigen magnetischen Befestigungselementen (23) auf einer Unterseite in die Mehrzahl von Profilen (20) eingelassen ist.

5. Deckenelement (1) nach Anspruch 3 oder 4, wobei die Deckenplatte (12) und die Tragkonstruktion (4) mittels einer scharnierartigen Verbindung (13) im Bereich einer ersten Seitenkante des Deckenelements (1) miteinander verbunden sind, so dass die Deckenplatte (12) durch Lösen der ersten und zweiten flächigen Verbindungsmittel (11, 23) entlang der ersten Seitenkante von der Tragkonstruktion (4) wegklappbar ist.

6. Deckenelement (1) nach Anspruch 5, wobei die scharnierartige Verbindung (13) wenigstens eine Vertiefung (17) der Tragkonstruktion (4) und wenigstens ein in die wenigstens eine Vertiefung (17) eingreifendes Haltelement (18) der Deckenplatte (12) zum lösbaren Befestigen der Deckenplatte (12) an der Tragkonstruktion (4) aufweist.

7. Deckenelement (1) nach Anspruch 5 oder 6, wobei die Deckenplatte (12) in einem zugeklappten Zustand, in dem die ersten flächigen Verbindungsmittel (11) die Oberseite der Deckenplatte (12) mit dem Luftkasten (5) verbinden, mittels wenigstens eines mechanischen Verschlusses (14) im Bereich einer der ersten Seitenkante gegenüberliegenden zweiten Seitenkante des Deckenelements (1) an der Tragkonstruktion (4) gesichert ist.

8. Deckenelement (1) nach Anspruch 7, wobei der wenigstens eine mechanische Verschluss einen an der Tragkonstruktion (4) befestigten Riegel (14) und einen an der Deckenplatte (12) geformten Hintergriff aufweist, der den Riegel (14) in einem verriegelten Zustand hintergreift.

9. Deckenelement (1) nach einem der Ansprüche 1 bis 8, wobei die Tragkonstruktion (4) eine Mehrzahl von mechanisch miteinander gekoppelten Zahnschienen (2) aufweist;
wobei die Rohranordnung (24) an den Zahnschienen (2) befestigt ist.

10. Deckenelement (1) nach Anspruch 9, wobei die Tragkonstruktion (4) und/oder der Luftkasten (5) des Weiteren zwei Befestigungswinkel (8) zur Fixierung des Luftkastens (5) an der Tragkonstruktion (4) aufweisen.

## Claims

1. Ceiling element (1), in particular a cooling or heating ceiling, having:
a supporting structure (4) for fixing the ceiling element (1) to a ceiling;
a pipe arrangement (24) fixed to the supporting structure (4) which can be flowed through by a heat transporting medium;
an air box (5) fixed to the supporting structure (4), which can be flowed through by supply air having an inlet (6) and an outlet area (7); and
a ceiling panel (12) mountable to the support structure (4) having a top, a bottom and a plurality of openings in the region of the outlet area (7) of the air box (5);
**characterised in that** the top of the ceiling panel (12) being releasably connected to the air box (5) by a first planar mounting means (11) surrounding the air box (5).

2. Ceiling element (1) according to claim 1, wherein the first connecting means comprise at least one strip-shaped magnetic mounting element (11).

3. Ceiling element (1) according to claim 1 or 2, wherein the upper side of the ceiling panel (12) is detachably connected to the support structure (4) and/or the pipe arrangement (24) via a second planar mounting means (23) arranged in the area of the pipe arrangement (24).

4. Ceiling element (1) according to claim 3, wherein the pipe arrangement (24) has a plurality of pipes (22) and a plurality of profiles (20);
wherein the second connection means has a plurality of strip-shaped magnetic mounting elements (23);
wherein the plurality of pipes (22) are received in receiving devices on an upper side of the plurality of profiles (20) and the plurality of strip-shaped magnetic mounting elements (23) are embedded on an underside in the plurality of profiles (20).

5. Ceiling element (1) according to claim 3 or 4, wherein the ceiling panel (12) and the supporting structure (4) are interconnected by means of a hinge-like connection (13) in the region of a first side edge of the ceiling element (1), so that the ceiling panel (12) can be folded away by releasing the first and second flat mounting means (11, 23) along the first side edge of the support structure (4).

6. Ceiling element (1) according to claim 5, wherein the hinge-like connection (13) comprises at least one recess (17) of the supporting structure (4) and at least one in the at least one recess (17) engaging retaining element (18) of the ceiling panel (12) for releasably securing the ceiling panel (12) on the support structure (4).

7. Ceiling element (1) according to claim 5 or 6, wherein the cover panel (12) in a closed state, in which the first planar mounting means (11) connect the top of the ceiling panel (12) with the air box (5), is secured by means of at least one mechanical fastener (14) in the region of the second side edge opposing the first side edge of the ceiling element (1) on the support structure (4).

8. Ceiling element (1) according to claim 7, wherein the at least one mechanical fastener comprises a latch (14) mounted to the support structure (4) and a rear groove formed on the ceiling panel (12), which engages behind the latch (14) in a locked condition.

9. Ceiling element (1) according to one of the claims 1 to 8, wherein the support structure (4) has a plurality of tooth rails (2) mechanically coupled to one another;
wherein the pipe arrangement (24) is mounted to the toothed rails (2).

10. Ceiling element (1) according to claim 9, wherein the support structure (4) and/or the air box (5) has further two mounting brackets (8) for fixing the air box (5) on the support structure (4).

## Revendications

1. Élément de plafond (1), en particulier d'un plafond refroidissant ou chauffant, comportant
une structure de support (4) pour fixer l'élément de plafond (1) au plafond d'un local ;
une tuyauterie (24) fixée sur la structure de support (4) et susceptible d'être traversée par un fluide caloporteur ;
un caisson à air (5) fixé sur la structure de support (4) et susceptible d'être traversé par de l'air d'alimentation et présentant une entrée (6) et une zone de sortie (7), et
un panneau de plafond (12) susceptible d'être fixé sur la structure de support (4) et présentant une face supérieure, une face inférieure et une pluralité d'ouvertures au niveau de la zone de sortie (7) du caisson à air (5) ;
**caractérisé en ce que**
la face supérieure du panneau de plafond (12) est reliée de façon amovible au caisson à air (5) via des premiers moyens de liaison (11) surfaciques entourant le caisson à air (5).

2. Élément de plafond (1) selon la revendication 1,
dans lequel
les premiers moyens de liaison présentent au moins un élément de fixation magnétique (11) en forme de ruban.

3. Élément de plafond (1) selon la revendication 1 ou 2,
dans lequel
la face supérieure du panneau de plafond (12) est reliée de façon amovible à la structure de support (4) et/ou à la tuyauterie (24) via des seconds moyens de liaison (23) surfaciques agencés au niveau de la tuyauterie (24).

4. Élément de plafond (1) selon la revendication 3,
dans lequel
la tuyauterie (24) comprend une pluralité de tuyaux (22) et une pluralité de profilés (20) ;
le second moyen de liaison comprend une pluralité d'éléments de fixation (23) magnétiques en forme de ruban ;
la pluralité de tuyaux (22) sont reçus dans des dispositifs de logement sur une face supérieure de la pluralité de profilés (20), et la pluralité d'éléments de fixation (23) magnétiques en forme de ruban sont encastrés sur une face inférieure dans la pluralité de profilés (20).

5. Élément de plafond (1) selon la revendication 3 ou 4,
dans lequel
le panneau de plafond (12) et la structure de support (4) sont reliés l'un à l'autre à l'aide d'une liaison (13) en forme de charnière au niveau d'une première arête latérale de l'élément de plafond (1), de sorte que le panneau de plafond (12) est susceptible d'être rabattu en éloignement de la structure de support (4) le long de la première arête latérale par détachement des premiers et des seconds moyens de liaison surfaciques (11, 23).

6. Élément de plafond (1) selon la revendication 5,
dans lequel
la liaison (13) en forme de charnière présente au moins une cavité (17) de la structure de support (4) et au moins un élément de retenue (18) du panneau de plafond (12), élément qui vient s'engager dans ladite au moins une cavité (17) en vue d'une fixation amovible du panneau de plafond (12) sur la structure de support (4).

7. Élément de plafond (1) selon la revendication 5 ou 6,
dans lequel
dans un état rabattu fermé dans lequel les premiers moyens de liaison surfaciques (11) relient la face supérieure du panneau de plafond (12) au caisson à air (5), le panneau de plafond (12) est bloqué sur la structure de support (4) à l'aide d'au moins une fermeture mécanique (14) au niveau d'une seconde arête latérale de l'élément de plafond (1) opposée à la première arête latérale.

8. Élément de plafond (1) selon la revendication 7,
dans lequel
ladite au moins une fermeture mécanique comprend un verrou (14) fixé sur la structure de support (4) et un élément d'engagement formé sur le panneau de plafond (12) et engageant par l'arrière le verrou (14) dans un état verrouillé.

9. Élément de plafond (1) selon l'une des revendications 1 à 8,
dans lequel
la structure de support (4) comprend une pluralité de crémaillères (2) mécaniquement couplées entre elles ;
la tuyauterie (24) est fixée aux crémaillères (2).

10. Élément de plafond (1) selon la revendication 9,
dans lequel
la structure de support (4) et/ou le caisson à air (5) comprennent en outre deux équerres de fixation (8) pour fixer le caisson à air (5) sur la structure de support (4).
